# EUROPÄISCHE PATENTSCHRIFT

(11) **EP 3 486 146 B1**
(45) Veröffentlichungstag und Bekanntmachung des Hinweises auf die Patenterteilung: **14.04.2021**
(21) Anmeldenummer: 17201952.3
(22) Anmeldetag: 15.11.2017
(51) Int. Cl.: B62D 25/00, B62D 29/00

(54) **VORRICHTUNG ZUR VERSTÄRKUNG UND ABDICHTUNG EINES STRUKTURELEMENTES**
DEVICE FOR REINFORCING AND SEALING A STRUCTURAL ELEMENT
DISPOSITIF DE RENFORCEMENT ET D'ÉTANCHÉITÉ D'UN ÉLÉMENT STRUCTUREL

(43) Veröffentlichungstag der Anmeldung: 22.05.2019
(73) Patentinhaber: SIKA TECHNOLOGY AG, 6340 Baar (CH)
(72) Erfinder: Belpaire, Vincent, 1180 Uccle (BE); Shehu, Ardi, 3111 Rotselaar (BE)
(74) Vertreter: Sika Patent Attorneys

(56) Entgegenhaltungen:
- EP-A1- 1 930 231
- WO-A1-01/58741

## Beschreibung

Die vorliegende Erfindung betrifft eine Vorrichtung zur Verstärkung und Abdichtung eines Strukturelementes, sowie ein System eines verstärkten und abgedichteten Strukturelementes eines Kraftfahrzeuges.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (englisch: baffle) verwendet, um Hohlräume abzudichten und/oder akustisch abzuschotten, oder Verstärkungselemente (englisch: reinforcer) verwendet, um Hohlräume zu verstärken.

In Fig. la ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12, auf. Solche Strukturelemente 12, 14 mit Hohlräumen werden üblicherweise mit Abdichtungs- und/oder Verstärkungselementen 16 abgedichtet bzw. verstärkt.

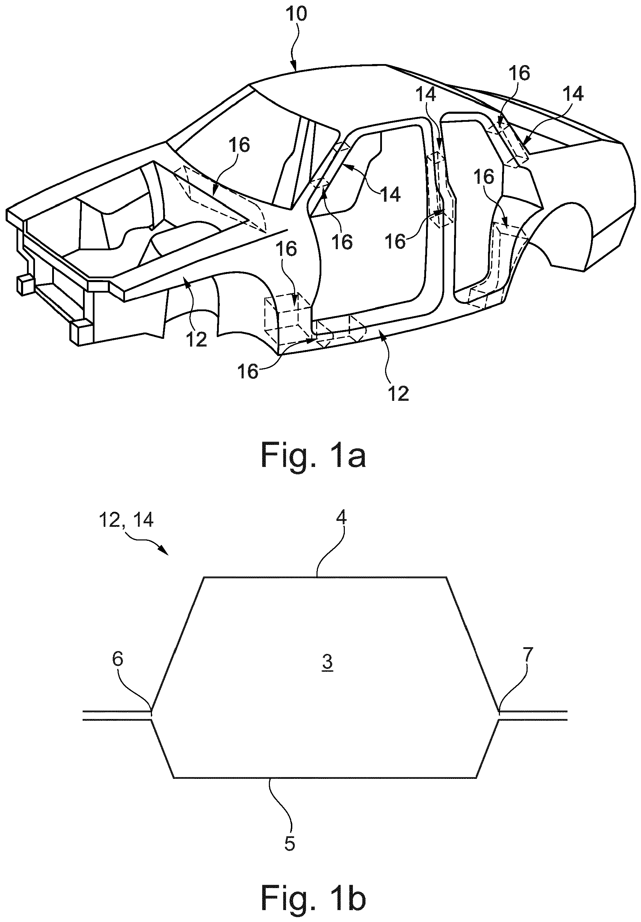

In Fig. 1b ist schematisch ein Querschnitt durch ein Strukturelement 12, 14 dargestellt. Oftmals sind bei solchen Strukturelementen 12, 14 ein erstes Blech 4 und ein zweites Blech 5 an Fügestellen 6, 7 zusammengefügt, wobei die Bleche 4, 5 zwischen den Fügestellen 6, 7 einen Hohlraum 3 ausbilden.

Es ist weiterhin wünschenswert, solche Strukturelemente 12, 14 mit gewichtsoptimierten und effizienten Komponenten Abzudichten und zu Verstärken. Aus WO01/58741A1 ist ein gattungsgemäßes Verstärkungselement bekannt, welches einen Träger mit mehreren Rippen umfasst.

Aus der EP1930231A1 ist ein Verstärkungsbauteil bekannt, bei welchem der Träger in Richtung seiner Längsachse Strömungskanäle aufweist.

Es ist daher eine Aufgabe der vorliegenden Erfindung, Verbesserungen für ein System eines verstärkten und abgedichteten Strukturelementes zur Verfügung zu stellen, wobei möglichst effiziente und gewichtsoptimierte Komponenten eingesetzt werden sollen.

Diese Aufgabe wird gelöst durch eine Vorrichtung zur Verstärkung und Abdichtung eines Strukturelementes in einem Kraftfahrzeug, umfassend: ein Verstärkungselement mit einer Längsachse, welches in einem Hohlraum des Strukturelementes anordenbar ist, wobei das Verstärkungselement Wände umfasst, welche sich im Wesentlichen in Richtung der Längsachse erstrecken, wobei Teilbereiche der Wände an einem äusseren Umfang des Verstärkungselementes zumindest ein Band bilden, welches das Verstärkungselement umläuft, und welches quer zur Längsachse des Verstärkungselementes verläuft.

Diese Lösung bietet den Vorteil, dass durch das Vorsehen eines solchen Bandes das Verstärkungselement zusätzlich dazu genutzt werden kann, das Strukturelement abzudichten. Dies war mit herkömmlichen Verstärkungselementen nicht in gleichem Masse möglich, weil die bisher bekannten Verstärkungselemente eine schachbrettartige Oberfläche zur Anbindung an das Strukturelement haben, sodass ein durchgehender Funktionen mit einem einzigen Element abgedeckt werden, nämlich die Verstärkung und die Abdichtung von Strukturelementen mit Hohlräumen, was sowohl Gewichtsvorteile als auch Kostenvorteile mit sich bringt. Zudem ist ein solch kombiniertes Element einfacher und kostengünstiger in der Anwendung, da nur ein Element bestellt, gelagert, gerüstet und verbaut werden muss.

Weiterhin bietet die hier vorgeschlagene Vorrichtung den Vorteil, dass in Strukturelementen mit knappen Platzverhältnissen nur ein Element eingesetzt werden kann, um das Strukturelement sowohl abzudichten als auch zu verstärken.

In einer beispielhaften Ausführungsform umläuft das Band das Verstärkungselement vollständig, sodass ein in sich geschlossenes, durchgehendes Band vorliegt.

In einer alternativen Ausführungsform umläuft das Band das Verstärkungselement im Wesentlichen vollständig, sodass ein im Wesentlichen durchgehendes Band vorliegt.

In einer weiteren alternativen Ausführungsform umläuft das Band das Verstärkungselement nicht vollständig, wobei das Band in Umfangsrichtung durch eine Lücke unterbrochen ist.

In einer beispielhaften Weiterbildung beträgt diese Lücke in Umfangsrichtung höchstens 10 mm oder höchstens 8 mm oder höchstens 6 mm oder höchstens 4 mm oder höchstens 2 mm.

In einer beispielhaften Ausführungsform hat das Verstärkungselement eine Ausdehnung, gemessen in Richtung der Längsachse des Verstärkungselementes, von zumindest 50 mm.

Dies bietet den Vorteil, dass die Vorrichtung, anders als herkömmliche Abdichtelemente, auch zur Verstärkung von Strukturelementen eingesetzt werden kann.

In einer beispielhaften Ausführungsform hat das Band eine Ausdehnung, gemessen in Richtung der Längsachse des Verstärkungselementes, von zumindest 3 mm oder zumindest 5 mm oder zumindest 7 mm oder zumindest 9 mm oder zumindest 11 mm oder zumindest 13 mm und/oder von höchstens von 30 mm oder höchstens 25 mm oder höchstens 20 mm oder höchstens 15 mm.

Dies bietet den Vorteil, dass durch eine geeignete Dimensionierung des Bandes eine Abdichtfunktion gewährleistet werden kann, und dass gleichzeitig die Vorrichtung nicht unnötig schwer und gross gestaltet wird.

In einer beispielhaften Ausführungsform kann eine zur Längsachse des Verstärkungselementes orthogonal angeordnete Ebene so gelegt werden, dass eine Schnittlinie dieser Ebene mit dem äusseren Umfang des Verstärkungselementes vollständig im Band liegt.

Dies bietet den Vorteil, dass dadurch eine möglichst effizient Abdichtung des Strukturelementes erreicht werden kann, weil mit einer solchen Anordnung ein Gewicht einer Dichtmasse optimiert werden kann.

In einer beispielhaften Ausführungsform weist das Verstärkungselement neben dem Band Flächen zur Verklebung mit dem Strukturelement auf.

In einer beispielhaften Ausführungsform weist das Verstärkungselement in Richtung der Längsachse jeweils vor und hinter dem Band Flächen zur Verklebung mit dem Strukturelement auf.

Dies bietet den Vorteil, dass dadurch die Verstärkungsfunktion der Vorrichtung optimiert werden kann, weil durch eine möglichst breit verteilte Verklebung des Verstärkungselementes mit dem Strukturelement eine bessere Verstärkungswirkung erzielbar ist.

In einer beispielhaften Ausführungsform ist zumindest auf Teilbereichen der Wände neben dem Band ein erster Klebstoff angeordnet, wobei zumindest auf Teilbereichen des Bandes ein zweiter Klebstoff angeordnet ist.

Dies bietet den Vorteil, dass durch das Vorsehen von zwei unterschiedlichen Klebstoffen beide Funktionen der Vorrichtung, nämlich das Abdichten und das Verstärken des Strukturelementes, optimiert werden können.

In einer beispielhaften Ausführungsform umfasst das Verstärkungselement Rippen, welche die Wände miteinander verbinden.

Dies bietet den Vorteil, dass dadurch ein an sich stärker mechanisch belastbares Verstärkungselement geschaffen werden kann.

In einer beispielhaften Ausführungsform enthält das Verstärkungselement Metall, Stahl, Aluminium, Magnesium, Kunststoff, faserverstärkter Kunststoff, Organo Sheet, oder eine Kombination dieser Materialien.

In einer beispielhaften Ausführungsform sind die Wände aus demselben Material gebildet.

Das hier beschriebene Verstärkungselement kann beispielsweise durch ein dreidimensionales Druckverfahren hergestellt werden.

Die eingangs gestellte Aufgabe wird zudem gelöst durch ein System eines verstärkten und abgedichteten Strukturelements in einem Kraftfahrzeug, das System umfassend: ein Strukturelement; ein Verstärkungselement gemäss obiger Beschreibung, wobei das Verstärkungselement im Strukturelement angeordnet ist; und einen ersten Klebstoff, wobei der erste Klebstoff das Verstärkungselement und das Strukturelement miteinander verbindet; und einen zweiten Klebstoff, wobei der zweite Klebstoff das Band mit dem Strukturelement verbindet.

In einer beispielhaften Ausführungsform hat der erste Klebstoff eine Expansionsrate von weniger als 500 % oder weniger als 400 % oder weniger als 300 % oder ist der Klebstoff ein nicht expandierbarer Klebstoff.

Wenig expandierbare oder nicht expandierbare Materialien bieten den Vorteil, dass dadurch der Klebstoff bei der Expansion nicht zu sehr an mechanischer Stabilität verliert. Grundsätzlich wird ein Material mechanisch schwächer, je stärker das Material expandiert wird.

Beispiele für nicht oder wenig expandierbare Klebstoffe sind insbesondere SikaReinforcer®-940 oder SikaPower®-497. Dabei ist SikaReinforcer®-940 ein Beispiel für ein expandierbares Material, wobei SikaPower®-497 ein Beispiel für ein nicht expandierbares Material ist.

Der Ausdruck "nicht expandierbar" bedeutet im Zusammenhang dieser Erfindung, dass ein Material sein Volumen nicht mehr oder weniger als 10% verändert bei den für das Material vorgesehenen Prozessschritten. Beispielsweise können nicht expandierbare Klebstoffe bei einer Aushärtung leicht schrumpfen. Eine solche Volumenveränderung bei einem Aushärten wird im Sinne dieser Anmeldung als "nicht expandierbar" betrachtet.

In einer beispielhaften Ausführungsform ist der zweite Klebstoff ein expandierbarer Klebstoff.

In einer beispielhaften Ausführungsform hat der zweite Klebstoff eine Expansionsrate von mehr als 800%, bevorzugt von mehr als 1000%, besonders bevorzugt von mehr als 1500%.

Ein Beispiel für solche stärker expandierbare Klebstoffe ist insbesondere SikaBaffle®-450.

In einer beispielhaften Ausführungsform ist der erste Klebstoff und/oder der zweite Klebstoff durch eine Temperatur von mehr als 120° oder von mehr als 140° oder von mehr al 160° härtbar.

In einer beispielhaften Ausführungsform hat nach einer Härtung der Klebstoffe der erste Klebstoff ein E-Modul von zumindest 100 MPa oder von zumindest 150 MPa oder von zumindest 200 MPa, und der zweite Klebstoff ein E-Modul von höchstens 20 MPa oder höchstens 15 MPa oder höchstens 10 MPa.

In einer weiteren alternativen Ausführungsform umfasst das System einen dritten Klebstoff, wobei die Klebstoffe unterschiedliche Eigenschaften, insbesondere hinsichtlich einer Expansion und/oder einer Aushärtung und/oder einer Anbindungsfähigkeit und/oder einer mechanischen Belastbarkeit, haben.

Einzelheiten und Vorteile der Erfindung werden im Folgenden anhand von Ausführungsbeispielen und mit Bezug auf schematische Zeichnungen beschrieben.

Es zeigen:
- Fig. 1a: schematische Darstellung einer Karosserie;
- Fig. 1b: schematische Darstellung eines Querschnittes durch ein Strukturelement; und
- Fig. 2a bis 4: schematische Darstellung einer Vorrichtung zur Verstärkung und Abdichtung eines Strukturelementes.

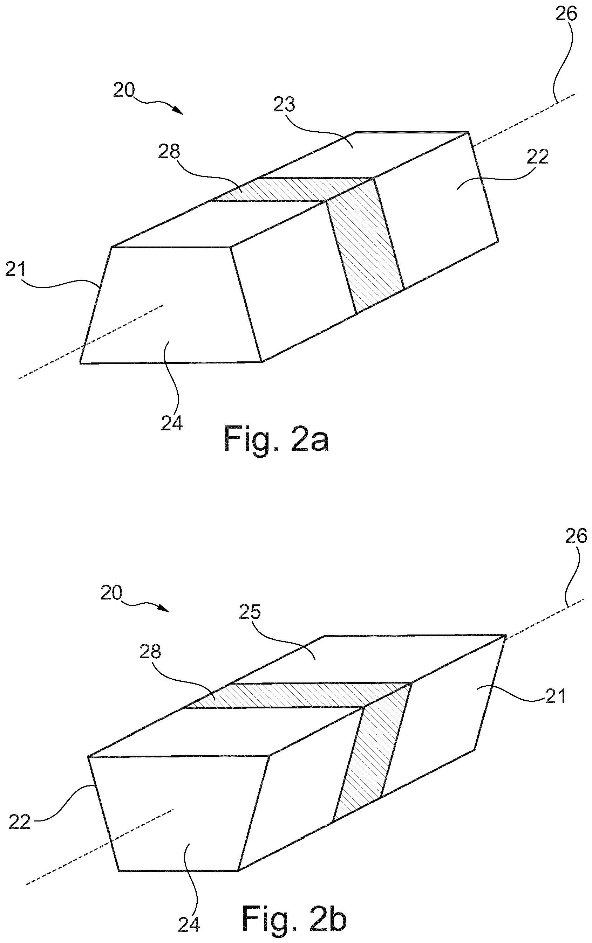

In den Fig. 2a und 2b ist ein erstes Ausführungsbeispiel eines Verstärkungselementes 20 schematisch dargestellt. Das Verstärkungselement 20 hat eine Längsachse 26 und Seitenwände 21, 22, 23, 25, welche sich entlang dieser Längsachse 26 erstrecken. Das Verstärkungselement 20 in diesem Ausführungsbeispiel hat zudem eine Vorderwand 24 und eine Rückwand24.

Teilbereiche der Seitenwände 21, 22, 23, 25 bilden ein Band 28, welches das Verstärkungselement 20 umläuft und welches quer zur Längsachse 26 verläuft.

Neben dem Band 28 haben die Seitenwände 21, 22, 23, 25 weitere Teilbereiche zur Verbindung des Verstärkungselementes 20 mit dem Strukturelement. Diese weiteren Teilbereiche sind sowohl vor als auch hinter dem Band 28 angeordnet, in Richtung der Längsachse 26.

Auf dem Band 28 kann ein stärker expandierbarer Klebstoff angeordnet werden, um den Querschnitt des Strukturelements vollständig abzudichten. Auf den Verbindungsflächen neben dem Band 28 kann ein weniger stark expandierbarer oder nicht expandierbarer Klebstoff angeordnet werden, um das Verstärkungselement 20 mit dem Strukturelement zu verkleben und dieses mechanisch zu verstärken.

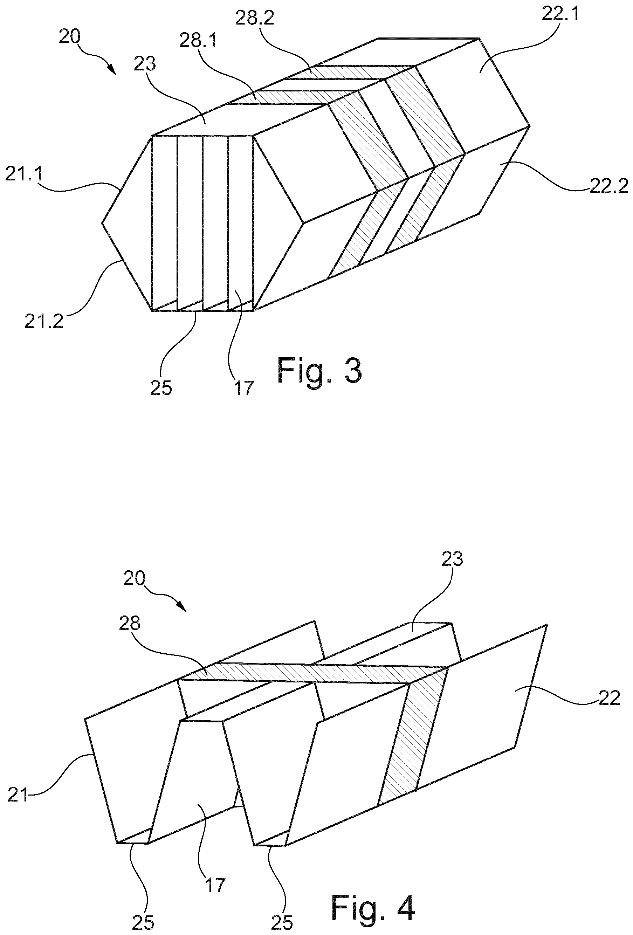

In Fig. 3 ist eine weitere beispielhafte Ausführungsform eines Verstärkungselementes 20 schematisch dargestellt. Im Unterschied zum Verstärkungselement 20 in den Fig. 2a und 2b hat dieses Verstärkungselement 20 jeweils in Teilwände 21.1, 21.2, 22.1, 22.2 unterteilte Seitenwände 21, 22, ein erstes Band 28.1 und ein zweites Band 28.2, sowie Rippen 17 in einem Innern des Verstärkungselementes 20. Zudem hat dieses Verstärkungselement 20 keine Vorderwand 24 und keine Rückwand 24.

Das Vorsehen von mehreren Bändern 28.1, 28.2 kann dazu benutzt werden, das Strukturelement an unterschiedlichen Stellen abzudichten, oder eine Abdichtung des Strukturelementes zu verbessern.

In Fig. 4 ist eine weitere beispielhafte Ausführungsform eines Verstärkungselementes 20 schematisch dargestellt. Im Unterschied zu den Beispielen in den Fig. 2a und 2b sowie 3 hat dieses Verstärkungselement 20 keine geschlossenen Seitenwände 21, 22, 23, 25, sondern einen W-förmigen bzw. M-förmigen Querschnitt, sodass die dritte Seitenwand 23 und die vierte Seitenwand 25 die jeweiligen Seiten nicht vollständig abdecken.

Das Band 28 ist in diesem Ausführungsbeispiel wiederum durch die Seitenwände 21, 22, 23, 25 gebildet, welche jeweils an der Stelle des Bandes 28 durchgehend ausgebildet sind.

### Bezugszeichenliste

- 1: System
- 3: Hohlraum
- 4: Erstes Blech
- 5: Zweites Blech
- 6: Erste Fügestelle
- 7: Zweite Fügestelle
- 10: Karosserie
- 11: Verstärkungselement
- 12: Strukturelement
- 13: Klebstoff
- 14: Strukturelement
- 16: Vorrichtung
- 17: Rippe
- 20: Verstärkungselement
- 21: Erste Seitenwand
- 22: Zweite Seitenwand
- 23: Dritte Seitenwand
- 24: Vorder-/Rückwand
- 25: Vierte Seitenwand
- 26: Längsachse
- 28: Band

## Patentansprüche

1. System (1) eines verstärkten und abgedichteten Strukturelements (12, 14) in einem Kraftfahrzeug, das System umfassend:
- ein Strukturelement (12, 14);
- ein Verstärkungselement (20) mit einer Längsachse (26), welches in einem Hohlraum (3) des Strukturelementes (12, 14) angeordnet ist, wobei das Verstärkungselement (20) Wände (21, 22, 23, 25) umfasst, welche sich im Wesentlichen in Richtung der Längsachse (26) erstrecken, und wobei Teilbereiche der Wände (21, 22, 23, 25) an einem äusseren Umfang des Verstärkungselementes (20) zumindest ein Band (28) bilden, welches das Verstärkungselement (20) umläuft, und welches quer zur Längsachse (26) des Verstärkungselementes (20) verläuft;
- einen ersten Klebstoff, wobei der erste Klebstoff das Verstärkungselement (20) und das Strukturelement (12, 14) miteinander verbindet; Z **dadurch gekennzeichnet, dass** das System einen zweiten Klebstoff umfasst, wobei der zweite Klebstoff das Band (28) mit dem Strukturelement (12, 14) verbindet.

2. System (1) nach Anspruch 1, wobei das Verstärkungselement (20) eine Ausdehnung, gemessen in Richtung der Längsachse (26) des Verstärkungselementes (20), von zumindest 50 mm hat.

3. System (1) nach Anspruch 1 oder 2, wobei das Band (28) eine Ausdehnung, gemessen in Richtung der Längsachse (26) des Verstärkungselementes (20), von zumindest 3 mm und/oder von höchstens von 30 mm hat.

4. System (1) nach einem der vorhergehenden Ansprüche, wobei eine zur Längsachse (26) des Verstärkungselementes (20) orthogonal angeordnete Ebene so gelegt werden kann, dass eine Schnittlinie dieser Ebene mit dem äusseren Umfang des Verstärkungselementes (20) vollständig im Band (28) liegt.

5. System (1) nach einem der vorhergehenden Ansprüche, wobei das Verstärkungselement (20) neben dem Band (28) Flächen zur Verklebung mit dem Strukturelement (12, 14) aufweist, und/oder wobei das Verstärkungselement (20) in Richtung der Längsachse (26) jeweils vor und hinter dem Band (28) Flächen zur Verklebung mit dem Strukturelement (12, 14) aufweist.

6. System (1) nach einem der vorhergehenden Ansprüche, wobei der zweite Klebstoff (13.2) ein expandierbares Material mit einer Expansionsrate von mehr als 500 % umfasst.

7. System (1) nach einem der vorhergehenden Ansprüche, wobei das Verstärkungselement (20) Rippen (17) umfasst, welche die Wände (21, 22, 23, 25) miteinander verbinden.

8. System (1) nach einem der vorhergehenden Ansprüche, wobei die Wände (21, 22, 23, 25) aus demselben Material gebildet sind.

9. System (1) nach einem der vorhergehenden Ansprüche, wobei das Verstärkungselement (20) Metall, Stahl, Aluminium, Magnesium, Kunststoff, faserverstärkter Kunststoff, Organo Sheet, oder eine Kombination dieser Materialien enthält.

10. System (1) nach einem der vorhergehenden Ansprüche, wobei der erste Klebstoff ein nicht expandierbarer Klebstoff ist oder ein expandierbarer Klebstoff ist.

11. System (1) nach einem der vorhergehenden Ansprüche, wobei der zweite Klebstoff ein expandierbarer Klebstoff ist.

12. System (1) nach einem der vorhergehenden Ansprüche, wobei der erste Klebstoff eine Expansionsrate von weniger als 500 % hat und wobei der zweite Klebstoff eine Expansionsrate von mehr als 800 % hat.

13. System (1) nach einem der vorhergehenden Ansprüche, wobei nach einer Härtung der Klebstoffe, der erste Klebstoff ein E-Modul von zumindest 100 MPa hat, und der zweite Klebstoff ein E-Modul von höchstens 20 MPa hat.

## Claims

1. System (1) of a reinforced and sealed structural element (12, 14) in a motor vehicle, the system comprising:
- a structural element (12, 14);
- a reinforcing element (20) which has a longitudinal axis (26) and which is disposed in a cavity (3) of the structural element (12, 14), wherein the reinforcing element (20) comprises walls (21, 22, 23, 25) which extend substantially in the direction of the longitudinal axis (26), and wherein part-regions of the walls (21, 22, 23, 25) on an external circumference of the reinforcing element (20) form at least one strip (28) which encircles the reinforcing element (20) and which runs transversely to the longitudinal axis (26) of the reinforcing element (20) ;
- a first adhesive, wherein the first adhesive interconnects the reinforcing element (20) and the structural element (12, 14);
**characterized in that** the system comprises a second adhesive, wherein the second adhesive connects the strip (28) to the structural element (12, 14).

2. System (1) according to Claim 1, wherein the reinforcing element (20) measured in the direction of the longitudinal axis (26) of the reinforcing element (20) has an extent of at least 50 mm.

3. System (1) according to Claim 1 or 2, wherein the strip (28) measured in the direction of the longitudinal axis (26) of the reinforcing element (20) has an extent of at least 3 mm and/or of at most 30 mm.

4. System (1) according to one of the preceding claims, wherein a plane that is disposed so as to be orthogonal to the longitudinal axis (26) of the reinforcing element (20) can be placed such that a section line of said plane by way of the external circumference of the reinforcing element (20) lies completely in the strip (28).

5. System (1) according to one of the preceding claims, wherein the reinforcing element (20) beside the strip (28) has faces for the adhesive bonding to the structural element (12, 14), and/or wherein the reinforcing element (20) in the direction of the longitudinal axis (26) ahead of and behind the strip (28) has in each case faces for the adhesive bonding to the structural element (12, 14).

6. System (1) according to one of the preceding claims, wherein the second adhesive (13.2) comprises an expandable material having an expansion rate of more than 500%.

7. System (1) according to one of the preceding claims, wherein the reinforcing element (20) comprises ribs (17) which interconnect the walls (21, 22, 23, 25).

8. System (1) according to one of the preceding claims, wherein the walls (21, 22, 23, 25) are formed from the same material.

9. System (1) according to one of the preceding claims, wherein the reinforcing element (20) contains metal, steel, aluminium, magnesium, plastics material, fibre-reinforced plastics material, organic sheet material, or a combination of said materials.

10. System (1) according to one of the preceding claims, wherein the first adhesive (13.1) is a non-expandable adhesive or an expandable adhesive.

11. System (1) according to one of the preceding claims, wherein the second adhesive is an expandable adhesive.

12. System (1) according to one of the preceding claims, wherein the first adhesive has an expansion rate of less than 500%, and wherein the second adhesive has an expansion rate of more than 800%.

13. System (1) according to one of the preceding claims, wherein upon curing of the adhesives the first adhesive has an E-modulus of at least 100 MPa, and the second adhesive has an E-modulus of at most 20 MPa.

## Revendications

1. Système (1) d'un élément structural renforcé et étanchéifié (12, 14) dans un véhicule automobile, le système comprenant :
- un élément structural (12, 14) ;
- un élément de renforcement (20) ayant un axe longitudinal (26), qui est agencé dans une cavité (3) de l'élément structural (12, 14), l'élément de renforcement (20) comprenant des parois (21, 22, 23, 25), qui s'étendent essentiellement dans la direction de l'axe longitudinal (26), et des zones partielles des parois (21, 22, 23, 25) formant sur une circonférence extérieure de l'élément de renforcement (20) au moins une bande (28), qui fait le tour de l'élément de renforcement (20), et qui s'étend perpendiculairement à l'axe longitudinal (26) de l'élément de renforcement (20) ;
- un premier adhésif, le premier adhésif reliant l'élément de renforcement (20) et l'élément structural (12, 14) l'un avec l'autre ;
**caractérisé en ce que** le système comprend un deuxième adhésif, le deuxième adhésif reliant la bande (28) avec l'élément structural (12, 14).

2. Système (1) selon la revendication 1, dans lequel l'élément de renforcement (20) a une étendue, mesurée dans la direction de l'axe longitudinal (26) de l'élément de renforcement (20), d'au moins 50 mm.

3. Système (1) selon la revendication 1 ou 2, dans lequel la bande (28) a une étendue, mesurée dans la direction de l'axe longitudinal (26) de l'élément de renforcement (20), d'au moins 3 mm et/ou d'au plus 30 mm.

4. Système (1) selon l'une quelconque des revendications précédentes, dans lequel un plan agencé orthogonalement à l'axe longitudinal (26) de l'élément de renforcement (20) peut être disposé de telle sorte qu'une ligne de coupe de ce plan avec la circonférence extérieure de l'élément de renforcement (20) se trouve entièrement dans la bande (28).

5. Système (1) selon l'une quelconque des revendications précédentes, dans lequel l'élément de renforcement (20) comprend en plus de la bande (28) des surfaces pour le collage avec l'élément structural (12, 14), et/ou dans lequel l'élément de renforcement (20) comprend, dans la direction de l'axe longitudinal (26) respectivement avant et après la bande (28), des surfaces pour le collage avec l'élément structural (12, 14) .

6. Système (1) selon l'une quelconque des revendications précédentes, dans lequel le deuxième adhésif (13.2) comprend un matériau expansible ayant un taux d'expansion de plus de 500 %.

7. Système (1) selon l'une quelconque des revendications précédentes, dans lequel l'élément de renforcement (20) comprend des nervures (17), qui relient les parois (21, 22, 23, 25) les unes avec les autres.

8. Système (1) selon l'une quelconque des revendications précédentes, dans lequel les parois (21, 22, 23, 25) sont formées du même matériau.

9. Système (1) selon l'une quelconque des revendications précédentes, dans lequel l'élément de renforcement (20) contient du métal, de l'acier, de l'aluminium, du magnésium, du plastique, du plastique renforcé par des fibres, de la tôle organique, ou une combinaison de ces matériaux.

10. Système (1) selon l'une quelconque des revendications précédentes, dans lequel le premier adhésif est un adhésif non expansible ou un adhésif expansible.

11. Système (1) selon l'une quelconque des revendications précédentes, dans lequel le deuxième adhésif est un adhésif expansible.

12. Système (1) selon l'une quelconque des revendications précédentes, dans lequel le premier adhésif a un taux d'expansion de moins de 500 % et dans lequel le deuxième adhésif a un taux d'expansion de plus de 800 %.

13. Système (1) selon l'une quelconque des revendications précédentes, dans lequel, après un durcissement des adhésifs, le premier adhésif a un module E d'au moins 100 MPa, et le deuxième adhésif a un module E d'au plus 20 MPa.
